# DEMANDE DE BREVET EUROPEEN

(11) **EP 2 418 077 A1**
(43) Date de publication de la demande: **15.02.2012**
(21) Numéro de dépôt: 11170857.4
(22) Date de dépôt: 22.06.2011
(51) Int. Cl.: B32B 5/18, B32B 27/04, B32B 27/06, B42C 99/00

(54) **Matériau enduit de résine et son procédé de fabrication**

(30) Priorité: 22.06.2010 FR 1054958
(71) Demandeur: Société d'Enduction et de Flockage, 53000 Laval (FR)
(72) Inventeur: LION, Alexandre, 53970 Nuillé-sur-Vicoing (FR); LION, Raphaël, 53000 LAVAL (FR)
(74) Mandataire: Lienard, Céline

(57) **Abrégé**

La présente invention concerne un matériau enduit comprenant un support recouvert d'au moins une couche en résine polymère, caractérisé en ce que ladite résine comprend des microsphères expansibles à la chaleur.

La présente invention se rapporte également au procédé de fabrication du nouveau matériau, ainsi qu'à son utilisation aux domaines de la reliure et du packaging et à un article comprenant ledit matériau enduit.

## Description

### Domaine de l'invention

La présente invention concerne un nouveau matériau réalisé par enduction destiné aux domaines de la reliure et du packaging. La présente invention se rapporte également au procédé de fabrication du nouveau matériau, ainsi qu'à son utilisation et à un article comprenant ledit matériau.

### Etat de la technique

De nombreuses matières synthétiques, obtenues le plus souvent par enduction (procédé consistant à appliquer une mince couche de matière sous forme fluide ou poudreuse sur un substrat) de résines polymères, présentent la propriété de changer de coloris lorsqu'elles sont soumises à un marquage thermique. Ces matières sont généralement à base de supports en papier, en carton, en non-tissé ou de supports textiles qui sont recouverts d'une ou plusieurs couches de résines polymères. En effet, ces matières sont obtenues par enduction sur le support choisi de résines acryliques ou polyuréthanes, en dispersion aqueuse ou en solution dans des solvants organiques, ou encore de plastisols à base de polychlorure de vinyle. L'enduction peut se faire en direct, en étalant la pâte préparée sur le support, ou bien par la méthode de « transfert » : dans ce cas, la résine formulée, encore en phase liquide, est déposée sur un papier anti-adhérent, lisse ou grainé, le support est déposé par simple contact sur la couche qui vient d'être enduite, et l'ensemble est fixé thermiquement par passage dans un tunnel de séchage. Dans le cas d'une enduction directe, un grainage de la surface, appliqué en reprise, peut modifier celle-ci et lui conférer un dessin « veiné » rappelant celui de la peau naturelle. Tous ces procédés sont largement connus et mis en oeuvre.

Les produits industriels ainsi fabriqués sont généralement utilisés comme matière de couvrure dans les industries de la reliure, de l'emballage et dans toutes les applications de décoration d'un support donné, dont il convient de modifier l'aspect et le toucher.

Une opération complémentaire mise en oeuvre très couramment sur ces matières est celle du marquage thermique : un outil métallique est usiné ou fondu de façon telle qu'il laisse apparaître, en relief, l'empreinte d'un modèle graphique que l'utilisateur souhaite imprimer en creux sur la surface à décorer. L'outil est porté à une température voisine de 120-150°C, fonction de la surface à marquer, puis il est appliqué sous une forte pression, pendant un temps assez court, sur la matière synthétique. Le principe est celui du « marquage au fer chaud », appliqué sur des cuirs et des peaux. Un film décoratif peut être inséré entre l'outil chauffé et la matière à décorer : le décor pré-imprimé ou déposé sur le film se reporte alors sur la matière synthétique, lui conférant l'aspect du film décoratif. Des impressions multicolores, ou des marquages dorés, argentés ou métallisés, présentant d'innombrables effets décoratifs, sont ainsi obtenus.

La même opération de marquage thermique, mise en oeuvre sans utilisation du film décoratif, permet l'obtention d'un marquage en creux, du même coloris que celui de la matière non marquée, ce qui est souvent insuffisamment visible.

Il est également possible de disposer de matières synthétiques qui présentent la propriété de changer de coloris - en général, elles deviennent plus foncées - sous l'action de la chaleur qui leur est appliquée pendant le marquage thermique. Cette propriété est le plus souvent obtenue en incorporant dans la résine polymère enduite des pigments dont le coloris se modifie de façon permanente lorsqu'ils sont chauffés, ou encore de disposer de résines polymères modifiées de façon à présenter par elles-mêmes cette propriété. Dans ces conditions, c'est à dire sans film décoratif - et donc de façon moins onéreuse -, un marquage en creux présentant une teinte plus foncée que celle de la matière vierge, et donc parfaitement visible, est obtenu. Cet aspect décoratif, obtenu par brunissement thermique d'une matière synthétique, est très recherché dans les domaines de la reliure et des industries graphiques.

Cette technique présente toutefois l'inconvénient de nécessiter la fabrication d'un outil reproduisant l'empreinte du modèle recherché ; cet outil est onéreux ce qui confère un prix élevé aux séries fabriquées en petit nombre et il doit être périodiquement remplacé dans le cas de multiples marquages. Le changement d'outil sur la machine de marquage est par ailleurs assez long, en raison de la température atteinte par l'outil. L'effet obtenu est par ailleurs toujours en creux, la matière décorée étant enfoncée lors de l'opération de marquage thermique.

La présente invention a pour but de proposer un nouveau matériau qui évite tout ou partie des inconvénients précités.

### Résumé de l'invention

A cet effet, l'invention a pour objet un matériau enduit comprenant un support recouvert d'au moins une couche en résine polymère, caractérisé en ce que ladite résine comprend des microsphères expansibles à la chaleur.

De préférence, le matériau enduit comprend une couche interne en résine polymère exempte de microsphères.

Avantageusement, le matériau enduit comprend une couche externe sur laquelle est formé un motif.

De manière préférée, les microsphères comportent une coquille polymère enfermant un agent gonflant apte à dilater ladite coquille sous l'action de la chaleur.

En particulier, l'agent gonflant est un gaz ou un liquide à bas point d'ébullition. Cet agent présente la propriété de gonfler sous l'action de la chaleur et de dilater la coquille « comme un ballon ». Ainsi, ces microsphères peuvent grossir jusqu'à quarante fois par rapport à leur taille initiale.

Préférentiellement, le support est choisi parmi : du papier, du carton, un non-tissé, un film plastique, un support textile, un tissé, un tricoté ou un de leurs mélanges.

Selon une caractéristique de l'invention, ladite couche de résine polymère est choisie parmi : une résine acrylique, une résine poly-chlorure de vinyle, une résine polyuréthane ou un de leurs mélanges. En particulier, ladite couche de résine polymère comprend en outre un agent choisi parmi : un additif rhéologique, des pigments, un agent matant, une émulsion à base de silicones ou un de leurs mélanges.

En particulier, l'invention concerne un matériau enduit comprenant un support recouvert d'au moins une couche externe en résine polymère comprenant des microsphères expansibles à la chaleur, caractérisé en ce que ladite couche externe comporte au moins une résine en polyuréthane.

La présente invention a également pour objet, un procédé de fabrication d'un matériau enduit tel que décrit ci-dessus, comprenant les étapes consistant à :
i) réaliser au moins une couche sur un support par enduction à partir d'une résine polymère comprenant des microsphères expansibles à la chaleur, de sorte à obtenir une couche en résine polymère comprenant lesdites microsphères,
ii) réaliser sur ladite couche au moins un motif à l'aide de moyens de chauffage sélectifs, permettant par chauffage et/ou pression, l'expansion desdites microsphères.

De préférence, l'étape i) comprend la réalisation d'une couche interne en résine polymère exempte de microsphères et d'une couche externe en résine polymère comprenant lesdites microsphères.

De manière avantageuse, le chauffage est réalisé à l'aide d'un faisceau laser et/ou d'un outil en relief chauffant.

Généralement, le laser est piloté par ordinateur et est usuellement du type identique aux lasers de découpe pour table traçante. Le faisceau laser va ainsi dessiner par balayage du support le motif choisi. Tandis que l'outil en relief est généralement un outil métallique sur lequel est gravé le motif à reproduire.

Le procédé selon l'invention permet ainsi de réaliser, avec un outil en relief (métallique) ou, plus spécifiquement, en l'absence d'un tel outil, un marquage thermique en relief ou en creux, présentant un coloris différent de celui de la surface vierge. Un effet en « deux-tons » propre aux matières thermo-réactives est ainsi obtenu. La surface ainsi marquée présente par ailleurs un toucher très agréable.

Cette solution est en outre applicable aux grandes et aux petites séries. Elle permet l'obtention d'une gravure très précise et conduit à des effets graphiques complètement originaux, ouvrant de multiples possibilités nouvelles dans le domaine des industries graphiques.

Selon une première variante, la température de chauffage se situe entre 120°C et 130°C, de sorte à obtenir un motif en relief par gonflage des microsphères ou égale ou supérieure à 150°C (par exemple de l'ordre de 150°C-160°C), de sorte à obtenir un motif en creux par écrasement ou vaporisation de la couche en résine comprenant les microsphères expansibles.

Dans une première variante de l'invention, il est possible de dessiner des motifs sur une couche de résine polymère externe comprenant les microsphères expansibles, en utilisant un outil métallique en relief, usiné ou fondu, tel qu'il est aujourd'hui pratiqué de façon classique.

Selon une seconde variante, on utilise un faisceau laser pour obtenir cet effet graphique, le réglage de la puissance du faisceau permettant, soit d'obtenir un motif en relief par gonflage des microsphères, soit d'obtenir une gravure en creux par vaporisation de la couche en résine comprenant les microsphères expansibles. Ces différents réglages permettent d'obtenir les températures adéquates afin de permettre soit un gonflement des microsphères, soit une vaporisation de la couche externe.

Ainsi, la puissance et la vitesse de balayage du faisceau peuvent être réglées de façon à ce que la température atteinte par la résine enduite lors du passage du faisceau enclenche l'expansion des microsphères. Cette opération provoque un gonflement de la partie touchée par le faisceau, avec une grande précision, et la surface balayée se transforme en une mousse présentant un coloris beaucoup plus pâle que la partie de la résine restée intacte, et un toucher extrêmement doux, rappelant celui d'une peau en daim. Ou alors, un réglage différent de la puissance du faisceau laser permet de vaporiser la couche de surface (couche externe), et de la creuser en profondeur jusqu'à révéler une couche enduite (couche interne), généralement de couleur, impression et/ou matière différente, et située sous la première couche : on peut ainsi faire apparaître sélectivement, selon un modèle donné, une couche interne présentant un coloris ou un aspect totalement différent de celui de la surface externe.

La programmation du balayage du faisceau laser permet ainsi de combiner sur un même matériau enduit un marquage thermique en creux ou en relief. Dans un premier temps, il est possible d'obtenir un marquage avec un outil chauffant, puis d'obtenir en reprise sur d'autres parties du matériau enduit un marquage en relief ou en creux par balayage programmé d'un faisceau laser.

Un but de la présente invention concerne également un produit ou article comprenant le matériau enduit susmentionné.

Un autre but de la présente invention se rapporte à l'utilisation d'un matériau enduit tel que décrit ci-dessus, pour emballer, conditionner ou relier des produits ou articles.

### Description de l'invention

L'invention sera mieux comprise, et d'autres buts, détails, caractéristiques et avantages de celle-ci apparaîtront plus clairement au cours de la description suivante d'un mode de réalisation particulier de l'invention et d'exemples illustratifs, donnés uniquement à titre illustratif et non limitatif, en référence aux dessins annexés.

Sur ces dessins:
- la figure 1 représente une vue en coupe longitudinale d'un matériau enduit selon un mode de réalisation de la présente invention comprenant un support recouvert par une seule couche de résine polymère comprenant des microsphères ;
- la figure 2 représente une vue en coupe longitudinale du matériau de la figure 1 après marquage en relief;
- la figure 3 représente une vue en coupe longitudinale du matériau de la figure 2 après marquage en creux ;
- et la figure 4 représente une vue en coupe longitudinale d'un matériau enduit selon une variante de réalisation dans laquelle le matériau comprend un support recouvert d'une première couche dit couche interne, exempte de microsphères, et recouverte elle-même d'une seconde couche, dite couche externe, cette dernière couche comprenant des microsphères.

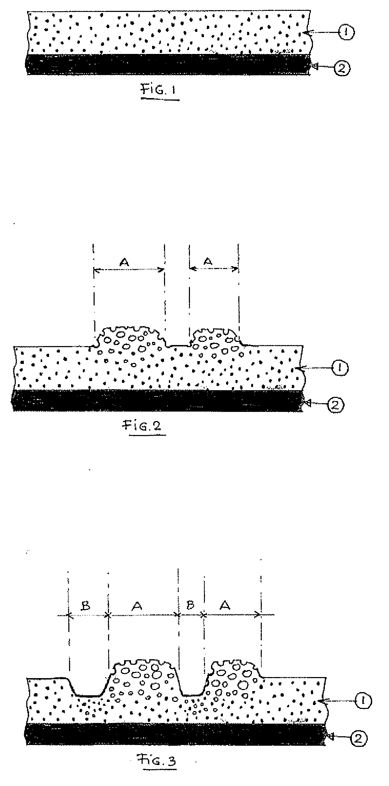

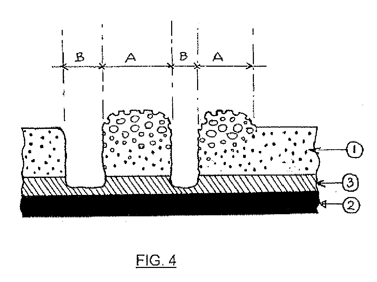

Afin d'obtenir le matériau enduit selon la présente invention, une ou plusieurs enductions, en direct ou par transfert, sur un support de nature quelconque, tel que du papier, du carton, un non-tissé, un film plastique ou un support textile, tissé ou tricoté est ou sont réalisées. Chaque enduction permet de réaliser une couche. Ainsi plusieurs enductions permettent de réaliser plusieurs couches qui se superposent les unes aux autres. Par exemple sur les figures 1 à 3, une enduction a été réalisé afin d'obtenir une couche 1 sur un support 2 tandis que sur la figure 4 deux enductions ont été réalisées afin d'obtenir une couche interne 3 et une couche externe 1, la couche interne 3 étant sous-jacente à la couche externe 1. Dans le cas d'un support 2 tissé ou non-tissé, un support 2 recouvert d'une enduction polyuréthane coagulée est de préférence utilisée. Cette résine polymère confère en effet au produit final un toucher plus moelleux. Dans le cadre de la présente invention, la couche externe 1 du matériau enduit comporte des microsphères expansibles à la chaleur.

Cette couche externe 1 peut être réalisée à partir de tout type de résines synthétiques : acryliques, poly-chlorure de vinyle... ces résines pouvant être en dispersion aqueuse ou en solution organique. Dans un aspect préféré de l'invention, des résines polyuréthanes sont utilisées. Elles donnent en effet à la couche externe 1 enduite un toucher doux et glissant, rappelant celui d'un cuir naturel. Cette résine polyuréthane est préférentiellement en dispersion aqueuse, pour des raisons écologiques, et de manière encore plus avantageuse, elle est mélangée à une résine acrylique pour abaisser le coût de la fabrication et en particulier le coût de la formulation de la résine. Par exemple, la résine est préparée pour l'enduction par épaississement chimique, et sa viscosité est portée à la valeur adaptée au dispositif d'enduction retenu (racle sur cylindre, reverse-roll, cadre rotatif...). Généralement une viscosité voisine de 500 Poises est souhaitée. La formulation de la résine est en outre pigmentée au coloris souhaité par addition de colorants adaptés à la formule. Enfin, est incorporée à la formule, avant enduction, une certaine quantité des microsphères expansibles susmentionnées.

A titre d'exemple une formulation pour la couche externe 1 est réalisée à l'aide d'une résine polyuréthane en dispersion aqueuse, coupée par 10 % de résine acrylique. Ces deux résines sont épaissies par ajout d'un additif rhéologique. Puis, cette formulation est pigmentée par des pigments compatibles avec la dispersion aqueuse, tels que les pigments de la société DYSTAR. Un agent matant est ensuite additionné, ainsi qu'une émulsion de silicones visant à améliorer le toucher de l'enduction. Enfin, des microsphères thermo-réactives compatibles avec les émulsions aqueuses, par exemple de l'EXPANCEL® de la société AKZO NOBEL ou du DUALITE® de la société HENKEL, sont ajoutées de sorte à représenter environ de 25% à 50%, et de manière préférée de l'ordre de 40% de la formulation de la couche externe. Ces microsphères sont choisies dans la catégorie compatible avec les dispersions aqueuses, par exemple les EXPANCEL® WU d'AZKO NOBEL. En particulier, les microsphères pourront présenter une dimension inférieure à 30 microns, telle que de l'ordre de 5 à 30 microns avec une température d'initialisation de l'expansion de l'ordre de 120 à 140°C. Ainsi, une couche externe présentant une surface thermo-réactive est obtenue.

Selon un premier mode de réalisation, cette surface est ensuite gravée par balayage d'un faisceau laser piloté par ordinateur. Dans un premier temps, le modèle/motif à reproduire est numérisé et le fichier correspondant est introduit dans l'ordinateur pilotant le laser. A titre d'exemple, le laser utilisé est une machine de type « plotter » de la société GCC, de référence SPIRIT ® présentant une puissance maximale de 25 W

Lorsque ce laser est réglé à une puissance de l'ordre 5 W à 6,2W, c'est-à-dire à une puissance assez faible (permettant d'obtenir un température de l'ordre de 120-130°C), le passage du faisceau provoque alors, à l'endroit précis du contact avec la surface enduite, l'expansion des microsphères contenues dans la couche de résine synthétique, donnant ainsi naissance à un marquage en relief A (figure 2 à 4) reproduisant le modèle/motif numérisé. Cet effet est représenté en particulier à la figure 2. L'expansion des microsphères transforme en mousse la résine enduite, et change fortement son coloris, qui conserve la même nuance, mais devient beaucoup plus clair en raison de la dilatation de la surface. On retrouve ainsi l'effet « deux-tons » recherché dans ce type de marquage thermique. Cette expansion de la couche externe enduite modifie également son toucher. Dans le cas d'une résine enduite en polyuréthane, un toucher doux et agréable, rappelant beaucoup celui d'une peau en daim, est obtenu.

Lorsque le laser est réglé à une puissance de l'ordre 20 W à 25W, c'est à dire à une puissance assez forte (permettant d'obtenir un température égale ou supérieure à 150-160°C), le passage du faisceau provoque non plus un gonflement des microsphères, mais une vaporisation en surface de la couche externe créant des creux B, comme cela est illustré sur la figure 3. Il est à noter, qu'un effet thermique trop puissant détruit la matière, alors qu'un effet trop faible provoque une expansion insuffisante.

Le marquage du modèle/motif dépend également de la vitesse de balayage du faisceau : plus la vitesse est grande et plus l'effet thermique ponctuel est faible. Elle doit être en effet suffisante pour permettre à la matière de s'échauffer. Ainsi, en fonction du paramétrage de la puissance et de la vitesse de balayage, l'homme du métier pourra peaufiner le marquage en relief et en creux. D'autres paramètres permettent également de peaufiner le marquage, comme la nature de l'enduction préparée, les caractéristiques de balayage (en effet, plus il y aura de lignes balayées pour former une image, plus celle-ci sera fine et précise), ainsi que la position de la focale du faisceau par rapport à la surface de la couche externe : l'effet est maximum et précis avec une focale positionnée sur la surface (couche externe) à graver, et il est amoindri et plus « flou » dans le cas contraire. Préférentiellement, la focalisation du faisceau est légèrement décentrée par rapport à la surface à marquer : un écart de 2 à 4 mm. Ceci permet de réduire l'effet thermique et d'éviter de brûler la couche enduite.

La machine décrite ci-dessus comporte un laser commandé par un plotter, dont le fonctionnement est semblable à celui d'une table traçante. Toutefois, il est également possible d'utiliser des lasers de type « galvo », beaucoup plus rapides, sur lesquels le déplacement du faisceau laser est commandé par un jeu de miroirs mobiles, et non plus par le déplacement mécanique d'un bras porteur.

Il est également possible d'utiliser un faisceau laser dont le déplacement est assujetti à un système de repérage optique : un capteur optique détecte sur la surface à marquer des repères qui y ont été imprimés, et le laser réalise son travail de gravure en se repérant par rapport à un dessin imprimé préexistant. Cette possibilité trouve une application dans le cas où la surface externe de la résine synthétique contenant les microsphères a été imprimée avant d'être soumise au faisceau laser. Cette impression peut être de tous types : sérigraphie, offset ou marquage à chaud par le procédé traditionnel (outil chauffé et présence, ou non, d'un film décoratif). Dans ce cas, un motif choisi est imprimé ou soumis à un marquage à chaud sous pression en reportant, dans une première étape, sur la surface imprimée des repères lisibles par un capteur optique. Dans une seconde étape, la surface imprimée est placée sur une machine laser équipée d'un système de repérage optique. Puis, les parties du motif imprimé que l'utilisateur souhaite en relief par gonflement des microsphères sont soumises sélectivement à l'action du faisceau laser pour être activées. Si l'utilisateur souhaite un marquage en creux, il est procédé de même hormis que la puissance du laser est augmentée. Ainsi, une surface décorée, combinant un effet imprimé ou un marquage thermique en creux, et des parties du motif qui apparaissent en relief, dans deux coloris différents de celui de la surface d'origine (fig. 3) est obtenue.

Dans une seconde variante de l'invention, un matériau enduit composé d'au moins deux couches distinctes est obtenu (figure 4), c'est à dire qu'il comprend une couche externe comportant les microsphères expansibles et une couche interne, sous-jacente à la couche externe et exempte de microsphères. La couche interne peut être de même nature chimique que la couche de surface, mais elle présente généralement un coloris ou un aspect différent : elle peut être colorée, imprimée ou métallisée. Les caractéristiques du faisceau laser - et plus particulièrement sa puissance - sont réglées pour un modèle donné en fonction de l'effet recherché : le faisceau balaiera ainsi le modèle à réaliser avec une puissance variable selon les parties sélectionnées. Sur certaines parties, la puissance sera adaptée au gonflement des microsphères contenues dans la couche de surface, et un motif en relief sera obtenu, alors que sur d'autres parties du même motif, balayées par un faisceau de puissance supérieure, la couche externe sera vaporisée de façon à révéler, sans la percer, la couche interne.

Exemple de réalisation de cette variante : Sur un support en papier saturé au latex de 90 g/m² est enduite une couche interne en polyuréthane en pigmentation OR de 50 g/m², elle-même recouverte par une couche externe en polyuréthane, pigmentation BRUN, contenant les microsphères, de 75-80 g/m². En utilisant le faisceau laser susmentionné, les parties en relief (A) ont été obtenues par un balayage à 25 % de la puissance et 100 % de la vitesse, tandis que les parties en creux (B), qui font apparaître la couche dorée sous-jacente, ont été obtenues par un balayage à 100 % de la puissance et 50 % de la vitesse. Lors du marquage, le faisceau était défocalisé de 0,8 cm par rapport à la surface à graver.

L'effet ainsi obtenu, en un seul passage et sans outil métallique usiné, combine des zones en relief présentant un coloris plus clair que celui de la couche de surface vierge, et des zones gravées en creux, sur lesquelles l'aspect et le coloris différents de la couche sous-jacente deviennent visibles. Bien évidemment, ces deux effets, en creux et en relief, peuvent être obtenus indépendamment l'un de l'autre.

Enfin, il est également possible de réaliser le marquage en relief ou en creux par l'intermédiaire des outils métalliques classiques connus de l'homme du métier, tels qu'un outil métallique en relief, usiné ou fondu. La présence de microsphères permet d'obtenir un effet de marquage en creux ou en relief, en fonction de la température de l'outil chauffant : à une température basse, voisine de 120-130°C, les parties de la couche de surface venues en contact avec les reliefs de l'outil chauffant présenteront, après marquage, un gonflement « en relief » et un coloris plus clair que celui de la surface initiale ; à une température plus élevée, égale ou supérieure à 150-160°C, l'effet obtenu sera celui du marquage en creux traditionnel, le gonflement des microsphères étant contrarié par l'application de l'outil chauffant. Dans ce second cas, l'utilisation par exemple d'un film intermédiaire de marquage à chaud, coloré ou métallisé, permet d'obtenir l'effet traditionnellement obtenu avec ce type d'application.

Il est évidemment possible de combiner sur un même motif un marquage thermique « en creux », réalisé dans un premier temps avec un outil chauffant, et de réaliser en reprise sur d'autres parties du modèle un marquage en relief ou en creux par balayage programmé d'un faisceau laser

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de invention.

## Revendications

1. Matériau enduit comprenant un support recouvert d'au moins une couche en résine polymère, **caractérisé en ce que** ladite résine comprend des microsphères expansibles à la chaleur.

2. Matériau enduit selon la revendication 1, comprenant au moins une couche interne en résine polymère exempte de microsphères.

3. Matériau enduit selon l'une des revendications précédente, comprenant une couche externe sur laquelle est formé un motif.

4. Matériau enduit selon l'une des revendications précédentes, dans lequel les microsphères comportent une coquille polymère enfermant un agent gonflant apte à dilater ladite coquille sous l'action de la chaleur.

5. Matériau enduit selon la revendication 4, dans lequel l'agent gonflant est un gaz ou un liquide à bas point d'ébullition.

6. Matériau selon l'une des revendications précédentes, dans lequel le support est choisi parmi : du papier, du carton, un non-tissé, un film plastique, un support textile, un tissé, un tricoté ou un de leurs mélanges.

7. Matériau selon l'une des revendications précédentes, dans lequel ladite couche de résine polymère est choisie parmi : une résine acrylique, une résine poly-chlorure de vinyle, une résine polyuréthane ou un de leurs mélanges.

8. Matériau enduit selon la revendication 7, dans lequel ladite couche de résine polymère comprend en outre un agent choisi parmi : un additif rhéologique, des pigments, un agent matant, une émulsion à base de silicones ou un de leurs mélanges.

9. Procédé de fabrication d'un matériau enduit selon l'une des revendications 3 à 8, comprenant les étapes consistant à :
i) réaliser au moins une couche sur un support par enduction à partir d'une résine polymère comprenant des microsphères expansibles à la chaleur, de sorte à obtenir une couche en résine polymère comprenant lesdites microsphères,
ii) réaliser sur ladite couche au moins un motif à l'aide de moyens de chauffage sélectifs, permettant par chauffage et/ou pression, l'expansion desdites microsphères.

10. Procédé de fabrication selon la revendication 9, dans lequel l'étape i) comprend la réalisation d'une couche interne en résine polymère exempte de microsphères et d'une couche externe en résine polymère comprenant lesdites micro sphères.

11. Procédé de fabrication selon l'une des revendications 9 et 10, dans lequel le chauffage est réalisé à l'aide d'un faisceau laser et/ou d'un outil en relief chauffant.

12. Procédé de fabrication selon l'une des revendications 9 à 11, dans lequel la température de chauffage se situe entre 120°C et 130°C, de sorte à obtenir un motif en relief par gonflage des microsphères ou égale ou supérieure à 150°C, de sorte à obtenir un motif en creux par vaporisation de la couche en résine comprenant les microsphères expansibles.

13. Produit ou article comprenant le matériau enduit selon l'une des revendications 1 à 8.

14. Utilisation d'un matériau enduit selon l'une des revendications 1 à 8, pour emballer, conditionner ou relier des produits ou articles.
